# EUROPÄISCHE PATENTSCHRIFT

(11) **EP 2 527 753 B1**
(45) Veröffentlichungstag und Bekanntmachung des Hinweises auf die Patenterteilung: **12.02.2014**
(21) Anmeldenummer: 12169131.5
(22) Anmeldetag: 23.05.2012
(51) Int. Cl.: F24F 7/08, F24F 11/00

(54) **Vorrichtung und Verfahren zur Regelung einer Frischluftzufuhr bei einer Vorrichtung zum Kühlen, Heizen und/oder Lüften eines Gebäudes**
Device and method for regulating a fresh air supply for a device for cooling, heating and/or ventilating a building
Dispositif et procédé de régulation d'une alimentation en air frais d'un dispositif de refroidissement, de chauffage et/ou de ventilation d'un bâtiment

(30) Priorität: 23.05.2011 AT 7382011
(43) Veröffentlichungstag der Anmeldung: 28.11.2012
(73) Patentinhaber: SES Spar European Shopping Centers GmbH, 5015 Salzburg (AT)
(72) Erfinder: Gruber, Roland, 5071 Siezenheim (AT)
(74) Vertreter: Jell, Friedrich

(56) Entgegenhaltungen:
- WO-A1-03/046445
- DE-A1- 3 509 621
- DE-C1- 19 847 504

## Beschreibung

Die Erfindung betrifft ein Vorrichtung und ein Verfahren zur Regelung einer Frischluftzufuhr bei einer Vorrichtung zum Kühlen, Heizen und/oder Lüften eines Gebäudes, bei der in Abhängigkeit der Anzahl sich im Gebäude befindlicher Personen eine zur Umluft der Vorrichtung zuzumischende Frischluftmenge geregelt wird, um damit wenigstens teilweise eine für das Gebäude vorgegebene Menge an Zuluft zu erzeugen.

Um je nach Bedarf die Menge an Frischluft für einen Raum eines Gebäudes einstellen zu können, ist es aus dem Stand der Technik bekannt (DE20102312U1), die Anzahl an Personen zu zählen, beispielsweise über eine berührungslose Personenerfassung, und in Abhängigkeit dieses Ergebnisses die Frischluftmenge anzupassen. Zwar kann damit die Menge an zugeführter Frischluft auf eine Personenanzahl abgestimmt werden, in der Praxis stellte sich jedoch heraus, dass trotzdem eine zusätzliche Menge an Frischluft berücksichtigt werden muss, um den Frischluftbedarf ausreichend decken zu können. Einen erhöhten Frischluftanteil zu berücksichtigen bedarf jedoch nachteilig eines erhöhten Betriebskostenaufwands, beispielsweise zum Ausgleich einer Temperaturdifferenz zwischen Frischluft und Gebäudeluft. Außerdem ist aus der DE19847504C1 bzw. JP2001604662 A bekannt, alternativ zur Personenanzahl den CO₂-Gehalt der Gebäudeluft zu messen. Eine zusätzliche Menge an Frischluft kann jedoch auch solch eine Messung nicht vermeiden, zumal unterschiedliche Druckverhältnisse in der Vorrichtung einen Einfluss auf die Menge an tatsächlich zugeführter Frischluft ausüben können und aus Gründen der Betriebssicherheit für einen Ausgleich eventuell fehlender Frischluftmengen gesorgt werden muss.

Des Weiteren ist aus der DE3887451T2 eine Klimaanlage bekannt, bei der für die Energiereduktion seines Kältemittelkreislaufs die Raum- und Zulufttemperatur sowie auch die Mischtemperatur von Umluft mit Zuluft zur Regelung der Frischluftzufuhr verwendet werden. In der US2091563A wird eine Regelung der Frischluftzufuhr nach der in einem Gebäude befindlichen Anzahl von Personen gezeigt. Ein weiteres Ausführungsbeispiel der US2091563A zeigt eine Regelung der Kälteanlage anhand einer Mischtemperaturmessung von Zuluft und Umluft.

Die Erfindung hat sich daher die Aufgabe gestellt, ausgehend vom eingangs geschilderten Stand der Technik ein Verfahren zur Regelung einer Frischluftzufuhr derart zu verbessern, dass mit einer genaueren Bestimmung der benötigten Frischluftmenge die Betriebskosten zum Kühlen, Heizen und/oder Lüften eines Gebäudes klein gehalten werden können.

Die Erfindung löst die gestellte Aufgabe hinsichtlich des Verfahrens dadurch, dass in Abhängigkeit der Mischtemperatur von Frischluft und Umluft die Menge an, entsprechend der Anzahl der sich im Gebäude befindlichen Personen zuzuführender Frischluft geregelt wird.

Wird in Abhängigkeit der Mischtemperatur von Frischluft und Umluft die Menge an, entsprechend der Anzahl der sich im Gebäude befindlichen Personen zuzuführender Frischluft geregelt, dann kann über einen vergleichsweise einfachen Verfahrensschritt eine besonders genaue Mengeneinstellung an zugeführter Frischluft gewährleistet werden. Über eine vorgegebene und damit bekannte Menge an Zuluft, der durch die Anzahl an Personen im Gebäude bestimmten Menge an Frischluft und über Temperaturmessungen von diversen Luftkomponenten, insbesondere Abluft, Umluft und/oder Raumluft sowie Außenluft und/oder Frischluft, kann nämlich eine Sollmischtemperatur der Mischluft berechnet werden. Über den Vergleich von Mischtemperatur von Frischluft und Umluft zur Sollmischtemperatur kann nun auf einfache Weise eine exakte Regelung der zuzuführenden Frischluft ermöglicht werden. Unnötige zusätzliche Mengen an Frischluft zu berücksichtigen kann somit entfallen, was nicht nur einen Aufwand zum Kühlen, Heizen und/oder Lüften eines Gebäudes vermindern, sondern auch die damit einhergehenden Betriebskosten senken kann. Hinzu kommt, dass das erfindungsgemäße Verfahren auch äußerst robust gegenüber fehlerhafter Mengenzufuhr an Frischluft ist, auch wenn eine vorgegebene Menge an zuzuführender Frischluft an der Vorrichtung einstellbar ist, weil durch deren Regelung über die Mischtemperatur sowohl herstellungsbedingte als auch sich im Betrieb einstellende Abweichungen auf einfache Weise kompensierbar werden können. Selbst eine auf Grundlage von unterschiedlichen Druckverhältnissen schwankende Menge an tatsächlich zugeführter Frischluft kann erfindungsgemäß ausgeglichen werden, ohne dass eine zusätzliche Menge an Frischluft standardisiert berücksichtigt werden muss. Das erfindungsgemäße Verfahren kann daher Standfestigkeit mit geringen Betriebskosten in Einklang bringen und sich so gegenüber dem Stand der Technik besonders auszeichnen.

Robuste Verfahrensverhältnisse zur Regelung der Frischluftzufuhr können sich ergeben, wenn eine Sollmischtemperatur der Umluft mit Frischluft berechnet wird und über einen Vergleich dieser Sollmischtemperatur mit der Mischtemperatur von Frischluft und Umluft die Menge an, entsprechend der Anzahl der sich im Gebäude befindlichen Personen zuzuführender Frischluft geregelt wird. Eine Voreinstellung der Menge an Frischluft anhand der Personen im Gebäude kann nämlich so schnell nachgeregelt bzw. geregelt werden. Höchsten Regelanforderungen für eine exakte Abstimmung der Menge an zuzuführender Frischluft kann so werden. Ebenso können damit unerwünschten Schwankungen in den Betriebsparametern der Vorrichtung regelschnell entgegengewirkt und damit der Energieverbrauch der Vorrichtung optimiert und so vorteilhaft reduziert werden.

Einfache Verfahrensverhältnisse können sich weiter ergeben, wenn die Anzahl der sich im Gebäude befindlichen Personen durch eine Zähleinrichtung gezählt wird. Dabei zeichnet sich - insbesondere in Einkaufszentren - eine berührungslose Zähleinrichtung aus, da diese von den im Gebäude befindlichen, das Gebäude betretenden und/ oder das Gebäude verlassenden Personen nicht wahrgenommen wird und daher solch ein Verfahren im Hintergrund ohne Störung der Personen arbeiten kann.

Die Genauigkeit des Verfahrens zur Frischluftzufuhr kann weiter verbessert werden, wenn bei der Regelung der Menge an zuzuführender Frischluft zusätzlich der CO2-Gehalt wenigstens Teile der Gebäudeluft, der Abluft und/oder Umluft berücksichtigt wird. Über den CO2-Gehalt kann nämlich auf den tatsächlichen Sauerstoffverbrauch der Personen im Gebäude rückgeschlossen werden, wodurch auch bei einem verminderten Verbrauch eine Reduktion der Menge an zuzuführender Frischluft möglich werden kann. Das erfindungsgemäße Verfahren kann daher die Betriebskosten des Gebäudes noch weiter verringern.

Es ist weiter die Aufgabe der Erfindung, eine Vorrichtung zum Kühlen, Heizen und/oder Lüften eines Gebäudes derart zu verbessern, dass eine standfeste Belüftung mit ausreichend Frischluft sichergestellt, die Betriebskosten der Vorrichtung jedoch gering gehalten werden können.

Die Erfindung löst die gestellte Aufgabe dadurch, dass die Regeleinrichtung mit dem Temperatursensor zum Berücksichtigen der Mischtemperatur von Frischluft und Umluft beim Steuern des Ventils in Abhängigkeit der Anzahl der sich im Gebäude befindlichen Personen verbunden ist.

Ist die Regeleinrichtung mit dem Temperatursensor zum Berücksichtigen der Mischtemperatur von Frischluft und Umluft beim Steuern des Ventils in Abhängigkeit der Anzahl der sich im Gebäude befindlichen Personen verbunden, dann kann auf einfache Weise die zuzuführende Frischluft in der Menge genau eingeregelt werden, weil über den Temperaturrückschluss auf die Mischtemperatur jegliche Abweichungen der Vorrichtung kompensierbar werden können. Die Vorrichtung ist daher besonders standfest in der Zufuhr einer ausreichenden Menge an Frischluft. Außerdem ist ein Vorsehen solch einer Regelung konstruktiv einfach lösbar, so dass eine kostengünstige Vorrichtung geschaffen werden kann, die sich zusätzlich auch aufgrund einer genaueren Zufuhr an Frischluftmenge durch verminderte Betriebskosten auszeichnen kann.

Ist die Regeleinrichtung mit dem Temperatursensor zum Berücksichtigen eines Vergleichs einer berechneten Sollmischtemperatur mit der Mischtemperatur von Frischluft und Umluft beim Steuern des Ventils in Abhängigkeit der Anzahl der sich im Gebäude befindlichen Personen verbunden, kann eine äußerst konstruktiv einfache Vorrichtung geschaffen werden. Die Vorrichtung kann zu diesem Zweck eine Recheneinheit aufweisen, die auch Teil der Regeleinrichtung sein kann. Aus einer vorgegebenen und damit bekannte Menge an Zuluft, der durch die Anzahl an Personen im Gebäude bestimmten Menge an Frischluft und über Temperaturmessungen von diversen Luftkomponenten, insbesondere Abluft, Umluft und/oder Raumluft sowie Außenluft und/oder Frischluft, kann nun diese Sollmischtemperatur der Mischluft berechnet werden. Diese Daten können dann von Regeleinrichtung für den Vergleich verwendet werden, um eine exakte Nachregelung der zuzuführenden Frischluft zu schaffen, deren Menge sich ja nach der Anzahl an Personen im Gebäude bestimmt. Unnötige zusätzliche Mengen an Frischluft zu berücksichtigen, kann somit entfallen, was die Betriebskosten zum Kühlen, Heizen und/oder Lüften eines Gebäudes vermindern kann.

Die Betriebskosten der Vorrichtung können noch weiter vermindert werden, wenn ein Sensor zur Messung des CO₂-Gehalts wenigstens Teile der Luft des Gebäudes vorgesehen ist, der mit der Regeleinrichtung verbunden ist. Über den CO₂-Gehalt kann nämlich auf die tatsächliche Qualität der Gebäudeluft rückgeschlossen und bei Bedarf der Anteil an Frischluft vermindert werden.

Die Erfindung kann sich besonders dadurch auszeichnen, dass eine Mischtemperatur von Frischluft mit Umluft bei einer Vorrichtung zum Kühlen, Heizen und/oder Lüften eines Gebäudes zum verbesserten Regeln der Menge an zuzuführender Frischluft entsprechend der Anzahl der sich im Gebäude befindlichen Personen verwendet wird, welche Vorteile bereits vorstehend näher erläutert wurden.

Eine vorteilhafte Regelung kann sich ergeben, wenn ein Vergleich der Mischtemperatur von Frischluft mit Umluft mit einer berechneten Sollmischtemperatur verwendet wird, die Menge an zuzuführender Frischluft entsprechend der Anzahl der sich im Gebäude befindlichen Personen, zu regeln.

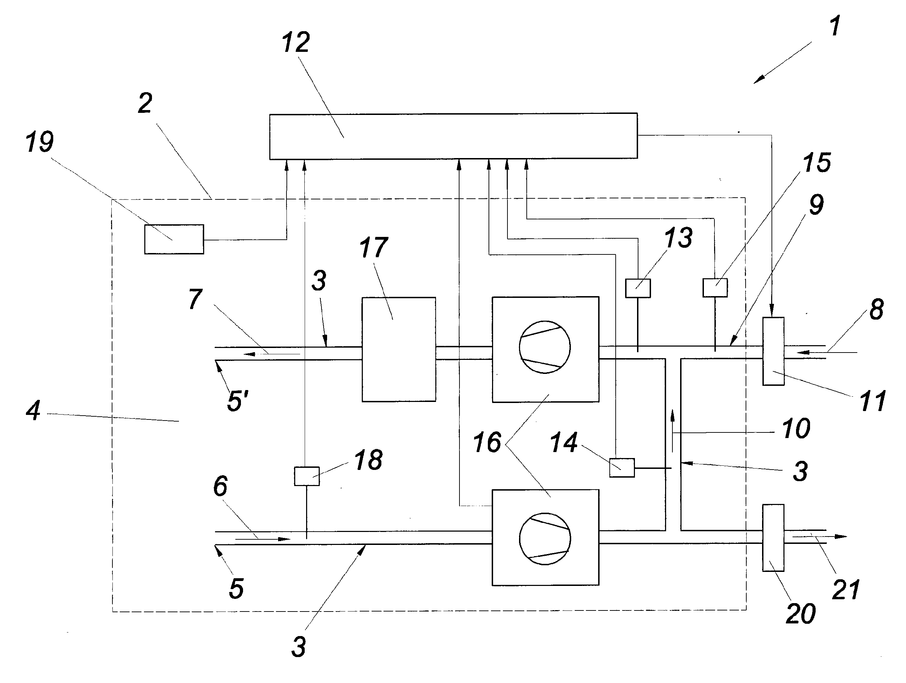

In der Figur ist beispielsweise die Erfindung anhand eines Ausführungsbeispiels näher dargestellt.

Die beispielsweise dargestellte Vorrichtung 1 zum Kühlen, Heizen und/oder Lüften eines Gebäudes 2 weist eine Luftführung 3 auf, mit der die Gebäudeluft 4 des Gebäudes 2 beeinflusst werden kann. So weist diese Luftführung 3 wenigstens eine in die Gebäudeluft 4 ragende Abluftöffnung 5 zum Entnehmen von Abluft 6 aus dem Gebäude 2 und eine Zuluftöffnung 5' zur Zufuhr von Zuluft 7 in das Gebäudes 2 auf. Anhand der Menge an entnommener Gebäudeluft 4 bzw. Abluft und zugeführter Zuluft 7 kann nun beispielsweise die Luftqualität im Gebäude 2 eingestellt werden, die sich unter anderem durch den Sauerstoffverbrauch der sich im Gebäude 2 befindlichen und nicht näher dargestellten Personen ändern kann. Zur Luftverbesserung kann der Zuluft 7 eine entsprechende Frischluft 8 zugeführt werden, da die Vorrichtung eine in die Luftführung 3 mündende Frischluftführung 9 aufweist. Frischluft 8 kann mit Umluft 10 der Luftführung 3 gemischt werden, um beispielsweise den Sauerstoffgehalt bzw. die Luftqualität der Gebäudeluft 4 zu verbessern. Um die Menge an zugeführter Frischluft 8 einstellen zu können, weist die Frischluftführung 9 ein Ventil 11 in Form einer Klappe auf. Eine Regeleinrichtung 12 ist mit dem Ventil 11 verbunden, und steuert die Offenlage bzw. Schließlage des Ventils 11 in Abhängigkeit der Anzahl der sich im Gebäude befindlichen Personen. Außerdem befindet sich in der Luftführung 3 ein Temperatursensor 13, mit dem die Temperatur der mit Frischluft 8 gemischten Umluft 10 gemessen wird. Die gemessene Temperatur des Temperatursensors 13 wird zur Temperierung der Zuluft 7 verwendet.

Erfindungsgemäß wird die gemessene Temperatur des Temperatursensors 13 aber auch zur verbesserten Steuerung der Menge an zuzuführender Frischluft 8 verwendet werden, wodurch erhöhte Standfestigkeit sowie geringe Betriebskosten der Vorrichtung 1 ermöglicht werden können. Der Temperatursensor 13 ist nämlich mit der Regeleinrichtung 12 zum Berücksichtigen der Mischtemperatur von Frischluft 8 und Umluft 10 beim Steuern des Ventils 11 in Abhängigkeit der Anzahl der sich im Gebäude 2 befindlichen Personen verbunden.

So kann beispielsweise durch Sensoren 13, 14 und 15 die jeweilige Temperatur von Umluft 10, Frischluft 8 und der mit Frischluft 8 gemischten Umluft 10 gemessen werden. Die Menge an Zuluft 7 für das Gebäude 2 ist bekannt bzw. wird von der Vorrichtung 1 festgelegt und/oder bestehen hierfür diverse gesetzliche Vorgaben beispielsweise 30 m³ Luft pro m² Fläche des Gebäudes 2. Die Menge an zuzuführender Frischluft 8 kann nun über die Anzahl an Personen im Gebäude berechnet werden, beispielsweise wird für jede Person 40 m³ Frischluft pro h Stunde vorgesehen. Über die bekannte Menge der vorgegebenen Zuluft 7, der nach der Anzahl an Personen berechneten Menge an Frischluft 8, sowie der Berücksichtigung von Temperaturen, beispielsweise Frischlufttemperatur, Ablufttemperatur etc., kann nun die Sollmischtemperatur von Umluft 10 und Frischluft 8 berechnet bzw. darauf geschlossen werden. Je nach Differenz der berechneten Sollmischtemperatur zur gemessenen Temperatur am Temperatursensor 13 kann nun festgestellt werden, ob die Menge an zugeführter Frischluft 8, die sich nach der Anzahl der Personen im Gebäude 2 bestimmt, korrekt ist. Mit einer diesbezüglichen Regelung des Ventils 11 kann nun eine Nachregelung der gemessenen Temperatur am Temperatursensor 13 an die Sollmischtemperatur geschaffen werden. Die Menge an zuzuführender Frischluft 8 ist so auf konstruktiv einfache Weise exakt einstellbar. Damit können unter anderem auch Schwankungen in der Frischluftzufuhr durch unerwünschte Druckverhältnisse in der Vorrichtung 1 ausgeglichen werden. Eine verbesserte Standfestigkeit der Vorrichtung gegenüber betriebsbedingten Schwankungen kann damit erreicht werden. Außerdem können damit die Betriebskosten beispielsweise bedingt durch den Energieverbrauch des Heiz- und/oder Kühlregisters 17 zur Temperierung der Zuluft 7 vermindert werden, wodurch sich die Vorrichtung besonders für Gebäude wie Einkaufszentren eignen kann.

Um die Betriebskosten noch weiter zu verringern, ist ein Sensor 18 zur Messung des CO₂-Gehalt wenigstens Teile der Luft des Gebäudes 2 vorgesehen, der mit der Regeleinrichtung 12 verbunden ist. Dieser Sensor 18 ist insbesondere im Bereich der Abluftöffnung 5 der Vorrichtung 1 vorgesehen, um für eine besonders genaue Messung sorgen zu können.

Die Anzahl der sich im Gebäude 2 befindlichen Personen wird durch eine berührungslos gegenüber den Personen arbeitenden Zähleinrichtung 19 gezählt. Diese Zähleinrichtung 19 ist mit der Regeleinrichtung 12 zur Bekanntgabe der Personenanzahl und der diesbezüglichen Berücksichtigung bei der Regelung der Frischluftzufuhr verbunden.

Die Vorrichtung weist außerdem ein Ventil 20 zur Regelung der Menge an Abluft 21 auf. Außerdem ist ein Ventilator 16 in der Führung der Zuluft 7 vorgesehen.

## Patentansprüche

1. Verfahren zur Regelung einer Frischluftzufuhr bei einer Vorrichtung (1) zum Kühlen, Heizen und/oder Lüften eines Gebäudes (2), bei der in Abhängigkeit der Anzahl sich im Gebäude (2) befindlicher Personen eine zur Umluft (10) der Vorrichtung (1) zuzumischende Frischluftmenge geregelt wird, um damit wenigstens teilweise eine für das Gebäude (2) vorgegebene Menge an Zuluft (7) zu erzeugen, **dadurch gekennzeichnet, dass** in Abhängigkeit der Mischtemperatur von Frischluft (8) und Umluft (10) die Menge an, entsprechend der Anzahl der sich im Gebäude (2) befindlichen Personen zuzuführender Frischluft (8) geregelt wird.

2. Verfahren nach Anspruch 1, **dadurch gekennzeichnet, dass** eine Sollmischtemperatur der Umluft (10) mit Frischluft (8) berechnet wird und über einen Vergleich dieser Sollmischtemperatur mit der Mischtemperatur von Frischluft (8) und Umluft (10) die Menge an, entsprechend der Anzahl der sich im Gebäude (2) befindlichen Personen zuzuführender Frischluft (8) geregelt wird.

3. Verfahren nach Anspruch 1 oder 2, **dadurch gekennzeichnet, dass** die Anzahl der sich im Gebäude (2) befindlichen Personen durch eine insbesondere berührungslose Zähleinrichtung (19) gezählt wird.

4. Verfahren nach Anspruch 1, 2 oder 3, **dadurch gekennzeichnet, dass** bei der Regelung der Menge an zuzuführender Frischluft (8) zusätzlich der CO₂-Gehalt wenigstens Teile der Gebäudeluft (4), der Abluft (6) und/oder Umluft (10) berücksichtigt wird.

5. Vorrichtung zum Kühlen, Heizen und/oder Lüften eines Gebäudes (2) mit einer wenigstens eine Umluft (10) führenden Luftführung (3), mit einer in diese Luftführung (3) mündenden Frischluftführung (9) zum Mischen der Umluft (10) mit Frischluft (8), welche Frischluftführung (9) ein Ventil (11) zum Einstellen der Menge an zugeführter Frischluft (9) aufweist, mit einer Regeleinrichtung (12) zum Steuern des Ventils (11) in Abhängigkeit der Anzahl der sich im Gebäude (2) befindlichen Personen und mit einem in der Luftführung (3) vorgesehenen Temperatursensor (13) zur Aufnahme der Mischtemperatur von Umluft (10) mit Frischluft (8), **dadurch gekennzeichnet, dass** die Regeleinrichtung (12) mit dem Temperatursensor (13) zum Berücksichtigen der Mischtemperatur von Frischluft (8) und Umluft (10) beim Steuern des Ventils (11) in Abhängigkeit der Anzahl der sich im Gebäude (2) befindlichen Personen verbunden ist.

6. Vorrichtung nach Anspruch 5, **dadurch gekennzeichnet, dass** die Regeleinrichtung (12) mit dem Temperatursensor (13) zum Berücksichtigen eines Vergleichs einer berechneten Sollmischtemperatur mit der Mischtemperatur von Frischluft (8) und Umluft (10) beim Steuern des Ventils (11) in Abhängigkeit der Anzahl der sich im Gebäude (2) befindlichen Personen verbunden ist.

7. Vorrichtung nach Anspruch 5 oder 6, **dadurch gekennzeichnet, dass** ein Sensor (18) zur Messung des CO₂-Gehalts wenigstens Teile der Luft (4) des Gebäudes (2) vorgesehen ist, der mit der Regeleinrichtung (12) verbunden ist.

8. Verwendung einer Mischtemperatur von Frischluft (8) mit Umluft (10) bei einer Vorrichtung (1) zum Kühlen, Heizen und/oder Lüften eines Gebäudes (2) zum verbesserten Regeln der Menge an zuzuführender Frischluft (8) entsprechend der Anzahl der sich im Gebäude (2) befindlichen Personen.

9. Verwendung nach Anspruch 8, **dadurch gekennzeichnet, dass** ein Vergleich der Mischtemperatur von Frischluft (8) mit Umluft (10) mit einer berechneten Sollmischtemperatur verwendet wird, die Menge an zuzuführender Frischluft (8) entsprechend der Anzahl der sich im Gebäude (2) befindlichen Personen, zu regeln.

## Claims

1. A method for controlling a fresh air supply in an apparatus (1) for cooling, heating and/or ventilating a building (2), in which a fresh air quantity which is mixed into the recirculated air (10) of the apparatus is controlled depending on the number of the persons situated in the building (2) in order to thus produce at least in part a quantity of supply air (7) predetermined for the building (2), **characterized in that** the quantity of fresh air (8) to be supplied depending on the number of the persons situated in the building (2) is controlled depending on the mixing temperature of fresh air (8) and recirculated air (10).

2. A method according to claim 1, **characterized in that** a setpoint mixing temperature of the recirculated air (10) with the fresh air (8) is calculated and the quantity of fresh air (8) to be supplied depending on the number of the persons situated in the building (2) is controlled via a comparison of said setpoint mixing temperature with the mixing temperature of fresh air (8) and recirculated air (10).

3. A method according to claim 1 or 2, **characterized in that** the number of the persons situated in the building (2) is counted by an especially contact-free counting device (19).

4. A method according to claim 1, 2 or 3, **characterized in that** during the control of the quantity of fresh air (8) to be supplied the CO₂ content of at least parts of the building air (4), the waste air (6) and/or the recirculated air (10) is additionally taken into account.

5. An apparatus for cooling, heating and/or ventilating a building (2), comprising at least one air duct (3) guiding recirculated air (10), a fresh air duct (9) opening into said air duct (3) for mixing the recirculated air (10) with the fresh air (8), which fresh air duct (9) is provided with a valve (11) for setting the quantity of the supplied fresh air (9), a closed-loop control device (12) for controlling the valve (11) depending on the number of persons situated in the building (2), and a temperature sensor (13) provided in the air duct (3) for recording the mixing temperature of recirculated air (10) with fresh air (8), **characterized in that** the closed-loop control device (12) is connected to the temperature sensor (13) for considering the mixing temperature of fresh air (8) and recirculated air (10) during the control of the valve (11) depending on the number of the persons situated in the building (2).

6. An apparatus according to claim 5, **characterized in that** the closed-loop control device (12) is connected to the temperature sensor (13) for considering a comparison of a calculated setpoint mixing temperature with the mixing temperature of fresh air (8) and recirculated air (10) during the control of the valve (11) depending on the number of the persons situated in the building (2).

7. An apparatus according to claim 5 or 6, **characterized in that** a sensor (18) is provided for measuring the CO₂ content of at least parts of the air (4) of the building (2), which sensor is connected to the closed-loop control device (12).

8. The use of a mixing temperature of fresh air (8) with recirculated air (10) in an apparatus (1) for cooling, heating and/or ventilating a building (2) for improved control of the quantity of fresh air (8) to be supplied according to the number of the persons situated in the building (2).

9. The use according to claim 8, **characterized in that** a comparison of the mixing temperature of fresh air (8) with recirculated air (10) with a calculated setpoint mixing temperature is used in order to control the quantity of fresh air (8) to be supplied according to the number of persons situated in the building (2).

## Revendications

1. Procédé pour réguler un apport d'air frais dans un dispositif (1) pour refroidir, chauffer et/ou ventiler un bâtiment (2), dans lequel une quantité d'air frais à mélanger à l'air en circulation (10) du dispositif (1) est régulée en fonction du nombre de personnes se trouvant dans le bâtiment (2) pour produire ainsi au moins partiellement une quantité d'air entrant (7) prédéterminée pour le bâtiment (2), **caractérisé en ce que** la quantité d'air frais (8) à amener par rapport au nombre de personnes se trouvant dans le bâtiment (2) est régulée en fonction de la température de mélange de l'air frais (8) et de l'air en circulation (10).

2. Procédé selon la revendication 1, **caractérisé en ce qu'**une consigne de température de mélange de l'air en circulation (10) avec l'air frais (8) est calculée et la quantité d'air frais (8) à amener par rapport au nombre de personnes se trouvant dans le bâtiment (2) est régulée à partir d'une comparaison de cette consigne de température de mélange avec la température de mélange de l'air frais (8) et de l'air en circulation (10).

3. Procédé selon la revendication 1 ou 2, **caractérisé en ce que** le nombre de personnes se trouvant dans le bâtiment (2) est compté par un dispositif de comptage (19), en particulier sans contact.

4. Procédé selon la revendication 1, 2 ou 3, **caractérisé en ce que** lors de la régulation de la quantité d'air frais (8) à amener, la concentration en CO₂ d'au moins certaines parties de l'air du bâtiment (4), de l'air d'extraction (6) et/ou de l'air en circulation (10) est prise en compte.

5. Dispositif pour refroidir, chauffer et/ou ventiler un bâtiment (2) avec au moins un conduit d'air (3) amenant de l'air en circulation (10), avec un conduit d'air frais (9) débouchant dans ce conduit d'air (3) pour mélanger l'air en circulation (10) avec de l'air frais (8), lequel conduit d'air frais (9) présente une vanne (11) pour régler la quantité d'air frais (9) amené, avec un dispositif de régulation (12) pour commander la vanne (11) en fonction du nombre de personnes se trouvant dans le bâtiment (2) et avec un capteur de température (13) prévu dans le conduit d'air (3) pour capter la température de mélange de l'air en circulation (10) avec l'air frais (8), **caractérisé en ce que** le dispositif de régulation (12) est relié au capteur de température (13) pour prendre en compte la température de mélange de l'air frais (8) et de l'air en circulation (10) lors de la commande de la vanne (11) en fonction du nombre de personnes se trouvant dans le bâtiment (2).

6. Dispositif selon la revendication 5, **caractérisé en ce que** le dispositif de régulation (12) est relié avec le capteur de température (13) afin de prendre en compte une comparaison d'une consigne de température de mélange calculée avec la température de mélange de l'air frais (8) et de l'air en circulation (10) pour commander la vanne (11) en fonction du nombre de personnes se trouvant dans le bâtiment (2).

7. Dispositif selon la revendication 5 ou 6, **caractérisé en ce qu'**il est prévu un capteur (18) pour mesurer la concentration en CO₂ d'au moins certaines parties de l'air (4) du bâtiment (2), qui est relié avec le dispositif de régulation (12).

8. Utilisation d'une température de mélange d'air frais (8) avec de l'air en circulation (10) dans un dispositif (1) pour refroidir, chauffer et/ou ventiler un bâtiment (2) afin d'améliorer la régulation de la quantité d'air frais (8) à amener en fonction du nombre de personnes se trouvant dans le bâtiment (2).

9. Utilisation selon la revendication 8, **caractérisée en ce qu'**une comparaison de la température de mélange de l'air frais (8) avec l'air en circulation (10) avec une consigne de température de mélange calculée est utilisée pour réguler la quantité d'air frais (8) à amener en fonction du nombre de personnes se trouvant dans le bâtiment (2).
